# EUROPÄISCHE PATENTSCHRIFT

(11) **EP 3 243 696 B1**
(45) Veröffentlichungstag und Bekanntmachung des Hinweises auf die Patenterteilung: **06.10.2021**
(21) Anmeldenummer: 17000602.7
(22) Anmeldetag: 07.04.2017
(51) Int. Cl.: B60N 2/75

(54) **ARMLEHNE**
ARMREST
ACCOUDOIR

(30) Priorität: 13.05.2016 DE 102016006230
(43) Veröffentlichungstag der Anmeldung: 15.11.2017
(73) Patentinhaber: GRAMMER AG, 92289 Ursensollen (DE)
(72) Erfinder: Siess, Thomas, 92280 Kastl (DE); Keller, Hubert, 92245 Kümmersbruck (DE); Berdich, Josef, 92224 Amberg (DE)
(74) Vertreter: Roche, von Westernhagen & Ehresmann

(56) Entgegenhaltungen:
- EP-A1- 1 676 743
- EP-A2- 2 003 015
- DE-A1- 10 110 330
- DE-A1-102008 056 290
- FR-A1- 2 841 511

## Beschreibung

Die Erfindung betrifft gemäß einem ersten Aspekt eine höhenverstellbare Armlehne.

Aus dem Stand der Technik sind Armlehnen mit schwenkbarer Armauflage bekannt. Durch schwenken der Armauflage in unterschiedliche Gebrauchspositionen kann auch die Höhe der Armlehne verändert werden. Mit der Veränderung der Schwenkposition geht aber auch eine Winkeländerung einher.

Des weiteren ist aus dem Stand der Technik eine Mittelkonsole mit Ablagefach und Armauflage bekannt, wobei die gesamte Konsole vertikal auf- und abbewegt werden kann. Diese Vorrichtung ist sehr aufwändig in der Herstellung und damit auch kostenintensiv.

In der DE 10 2004 038 059 A1 ist eine Mittelkonsole mit einer höhenverstellbaren Armlehne beschrieben. Die Mittelkonsole umfasst ein inneres und ein äußeres Gehäuseteil, die teleskopartig ineinander verschiebbar sind. Das Gehäuseteil, an welchem die Armlehne gehalten ist, ist dadurch höhenverstellbar. Eine lösbare Arretierung in der eingestellten Höhenposition wird mittels einer Zahnstange erreicht, die mit einem Rastelement zusammenwirkt.

Die DE 196 11 894 C1 beschreibt eine höhenverstellbare Armlehne als Teil einer Mittelkonsole. Die Armlehne ist mittels einer Hubeinrichtung höhenverstellbar und mit einer Parallelogrammführung zu der Mittelkonsole zwangsgekoppelt.

Die DE 101 10 330 A1 beschreibt eine Mittelkonsole mit Armauflage und mit einer Vorrichtung zur Höhenverstellung. Die Vorrichtung umfasst ein Zahnradgetriebe, welches mit Zahnstangen in Eingriff steht, die an einem höhenverstellbaren Rahmen angeordnet sind, an dessen oberem Ende die Armauflage angeordnet ist.

Die DE 100 32 657 A1 offenbart eine Mittelkonsole mit einem durch ein Deckelmodul verschließbaren unteren Staufach. Das Deckelmodul umfasst ein oberes Staufach, welchem ein bewegbarer Deckel zugeordnet ist. Aus einer Schließstellung ist das Deckelmodul in eine Höhenlage verstellbar, in welcher eine in dem oberen Staufach angeordnete Fernsprecheinrichtung in Fahrzeuglängsrichtung aus dem Staufachbewegbar ist.

Die FR 2 841 511 A1 offenbart eine Armlehne nach dem Oberbegriff des Anspruchs 1.

Weitere Armlehnen sind aus der DE 10 2008 056 290 A1, der EP 2 003 015 A2 und der EP 1 676 743 A1 offenbart.

Es war Aufgabe der Erfindung eine höhenverstellbare Armlehne zu schaffen, die einfach in der Herstellung ist und möglichst unabhängig von anderen Einrichtungen, wie Ablagefach, ist.

Die Aufgabe wurde gelöst durch eine Armlehne mit den Merkmalen des Anspruchs 1.

Sinnvolle weitere Merkmale sind in den abhängingen Ansprüchen definiert.

Die erfindungsgemäße Armlehne umfasst eine Armauflage, die mittels einer Verstellvorrichtung vertikal verstellbar an einer Fahrzeugstruktur gehalten ist. Die Verstellung erfolgt dabei z.B. unabhängig von einem Staufach. Auf diese Weise kann die vertikale Position der Armauflage an die Größe des Sitzinsassen angepasst werden. Die Verstellvorrichtung kann z.B. mit einem manuellen Antrieb oder alternativ elektrisch erfolgen. Die Verstellvorrichtung der Armlehne umfasst hierbei eine Führung nach Anspruch 1.

Die Führung ist z.B. von einer Linearführung gebildet. Mittels der Linearführung ist der Läufer auf einer linearen Bahn geführt. Die Führungsbahn kann z.B. eine Zahnleiste umfassen, die mit einem Zahnrad in Eingriff steht, welches Teil des Läufers ist. Eine Linearführung stellt eine wenig aufwändige Art der Führung dar.

Die Führungsstange stellt dem Läufer eine große Führungsfläche bereit. Z.B. kann der Läufer den Umfang der Führungsstange wenigstens teilweise umgreifen.

Die Führungsstange kann z.B. einen kreiszylindrischen Querschnitt oder alternativ andere Querschnittsformen, wie oval, rechteckig, etc. aufweisen. Derartige Führungsstangen sind handelsüblich.

Die Linearführung umfasst z.B. wenigstens ein erstes Paar und eine zweites Paar von Führungsbahn und Läufer. Dabei synchronisiert z.B. eine Synchronisationsvorrichtung die Bewegung des Läufers des ersten Paares und des zweiten Paares. Hiermit wird ein Verkanten der der Läufer verhindert, so dass sich die Armauflage immer leichtgängig in vertikaler Richtung bewegen lässt.

Gemäß einer Ausführungsform umfasst das erste Paar und das zweite Paar eine der Führungsbahn zugeordnete Zahnleiste und ein mit der Zahnleiste in Eingriff stehendes Zahnrad, welches dem Läufer zugeordnet ist. Die mit den Zahnleisten in Eingriff stehenden Zahnräder sind untereinander mit einer Zahnradwelle bewegungsverbunden. Auf diese Weise kann kein Verkanten durch unterschiedliche Bewegungen zwischen dem ersten Paar und dem zweiten Paar.

Die Armauflage ist mittels einer Arretiervorrichtung in wenigstens einer vertikalen Position festlegbar. Die Arretiervorrichtung umfasst wenigstens ein der Fahrzeugstruktur zugeordnetes erstes Arretiermittel und wenigstens ein der Armauflage zugeordnetes zweites Arretiermittel.

Die Arretiervorrichtung umfasst z.B. als Arretiermittel eine der Armauflage zugeordnete Schlingfeder, die zwischen einer Arretierposition und einer Löseposition verstellbar ist. Diese ist z.B. der Armauflage zugeordnet, d.h. sie bildet ein zweites Arretiermittel. Die Schlingfeder umwindet z.B. eine Struktur der Führung. In der Arretierposition ist der Durchmesser der Schlingfeder derart reduziert, dass die Schlingfeder in festem Kontakt mit der Außenfläche der Struktur der Führung steht und eine Bewegung der Armauflage verhindert. In der Löseposition ist der Durchmesser der Schlingfeder derart aufgeweitet, dass kein fester Kontakt zu der Außenfläche besteht, wodurch eine Bewegung der Armauflage ermöglicht wird.

Gemäß einer Ausführungsform wirkt die Schlingfeder mit einer der Fahrzeugstruktur zugeordneten Führungsstange der Führung oder mit einer der Armauflage zugeordneten Zahnradwelle zusammen, wobei die Armauflage in der Arretierposition in der eingestellten vertikalen Position arretiert ist und in der Löseposition in der vertikalen Position verstellbar ist.

Die Armauflage ist z.B. von wenigstens einer Feder in eine Bewegungsrichtung belastet. Z.B. kann die Armauflage entgegen der Federkraft vertikal nach unten bewegt werden, wobei die Feder gespannt wird. Bei einer Bewegung der Armauflage nach oben unterstützt die Federkraft die Aufwärtsbewegung.

Weitere Vorteile der Erfindung ergeben sich aus der nachfolgenden Beschreibung eines in den Fig. schematisch dargestellten Ausführungsbeispiels. Es zeigen:
Fig. 1 eine Seitenansicht eines ersten Ausführungsbeispiels einer Verstellvorrichtung für eine Armlehne in einer ersten vertikalen Höhenposition,
Fig. 2 eine Schnittdarstellung gemäß Schnittlinie II - II in Fig. 1,
Fig. 3 eine Schnittdarstellung gemäß Schnittlinie III - III in Fig. 2,
Fig. 4 in Anlehnung an Fig. 1 die Verstellvorrichtung in einer zweiten Höhenposition,
Fig. 5 eine Schnittdarstellung gemäß Schnittlinie V - V in Fig. 4,
Fig. 6 eine Schnittdarstellung gemäß Schnittlinie VI - VI in Fig. 5
Fig. 7 eine Schnittdarstellung gemäß Schnittlinie VII - VII in Fig. 8,
Fig. 8 eine Seitenansicht eines zweiten Ausführungsbeispiels einer Verstellvorrichtung für eine Armlehne,
Fig. 9 eine Schnittansicht gemäß Schnittlinie IX - IX in Fig. 8.

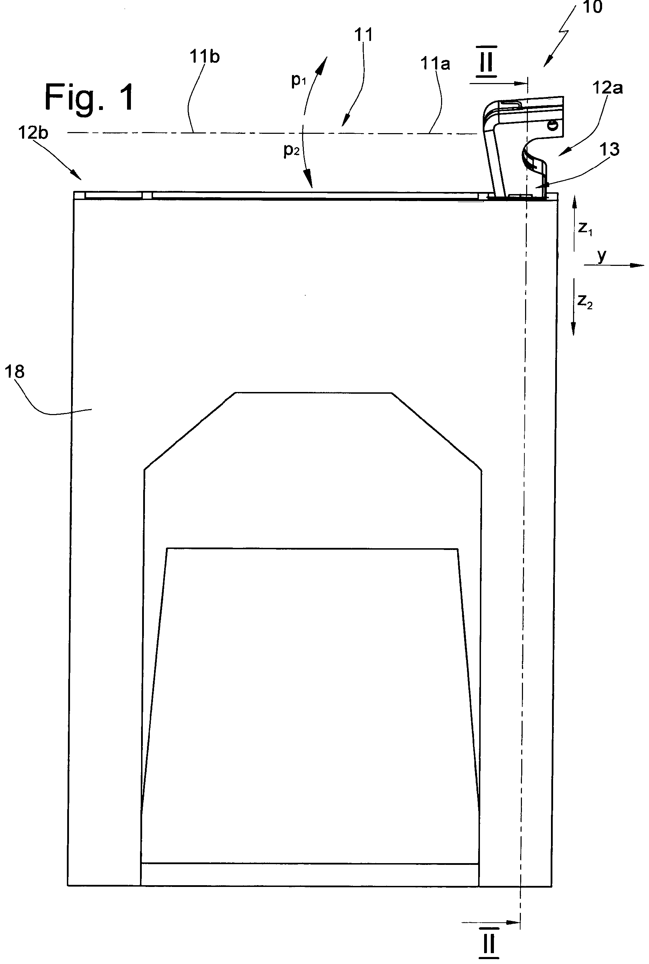

Eine Fahrzeugarmlehne umfasst eine Armauflage, die mittels einer Verstellvorrichtung 10 vertikal in Richtungen z1 und z2 vertikal verstellbar ist. In Fig. 1 ist die Armauflage 11 der Übersichtlichkeit halber lediglich mit einer strichpunktierten Linie angedeutet. Im vorliegenden Ausführungsbeispiel ist die Armauflage aus zwei Teilen 11a und 11b gebildet.

Der Teil 11a des Deckels 11 ist mit einer Lager- und Führungsvorrichtung 12a und der Teil 11b des Deckels 11 ist mit einer Lager- und Führungsvorrichtung 12b gelagert. Weil beide Teile 11a und 11b in gleicher Weise gelagert sind, soll nachfolgend lediglich die Lagerung des Deckels 11a beschrieben werden. Der Teil 11a ist an einem Läufer 13 z.B. schwenkbar gehalten (der Läufer der Lager- und Führungsvorrichtung 12b ist in Fig. 1 nicht dargestellt). Der Teil 11a ist in die Richtungen p1 und p2 zwischen einer in Fig. 1 dargestellten etwa horizontalen Position und einer etwa um 90 Grad in Richtung p1 verschwenkten vertikalen Position bewegbar.

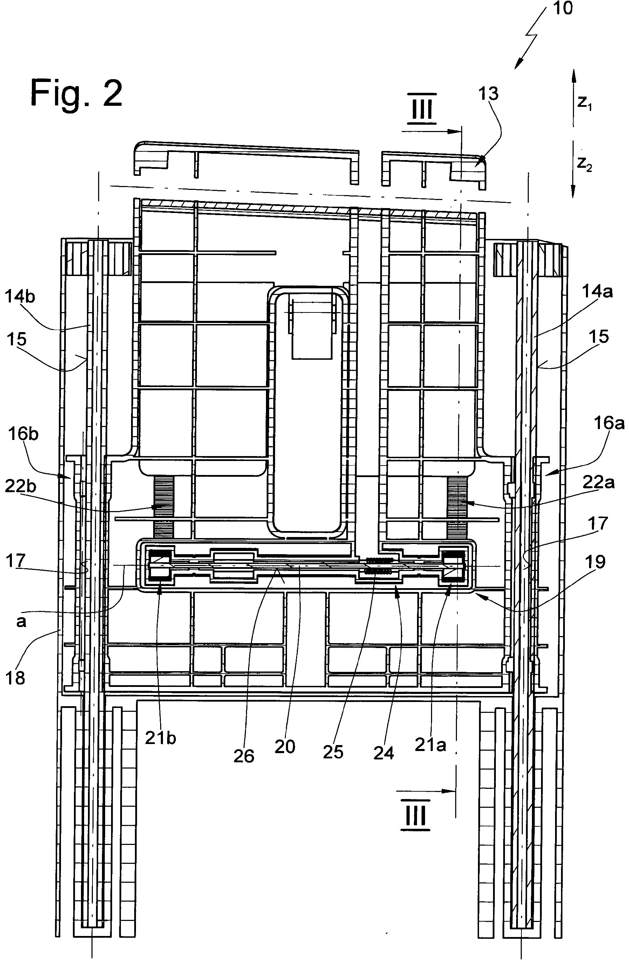

Der Läufer 13 kann mittels der Lager- und Führungsvorrichtung 12a in Richtung z1 und z2 bewegt werden. In Fig. 2 ist erkennbar, dass die Lager- und Führungsvorrichtung 12a zwei Führungsstangen 14a und 14b umfasst. Ein Seitenbereich 16a des Läufers 13 steht mit der Außenfläche 15 der Führungsstange 14a und ein Seitenbereich 16b des Läufers 13 steht mit der Außenfläche 15 der Führungsstange 14b in Kontakt. Die im Querschnitt etwa kreiszylindrischen Führungsstangen 14a und 14b durgreifen jeweils komplementäre Aussparungen 17 in den Seitenbereichen 16a und 16b. Die Führungsstangen 14a und 14b sind an einem fahrzeugfesten Basisteil 18 gehalten. In Fig. 2 ist erkennbar, dass der Läufer 13 plattenflörmig ausgebildet ist.

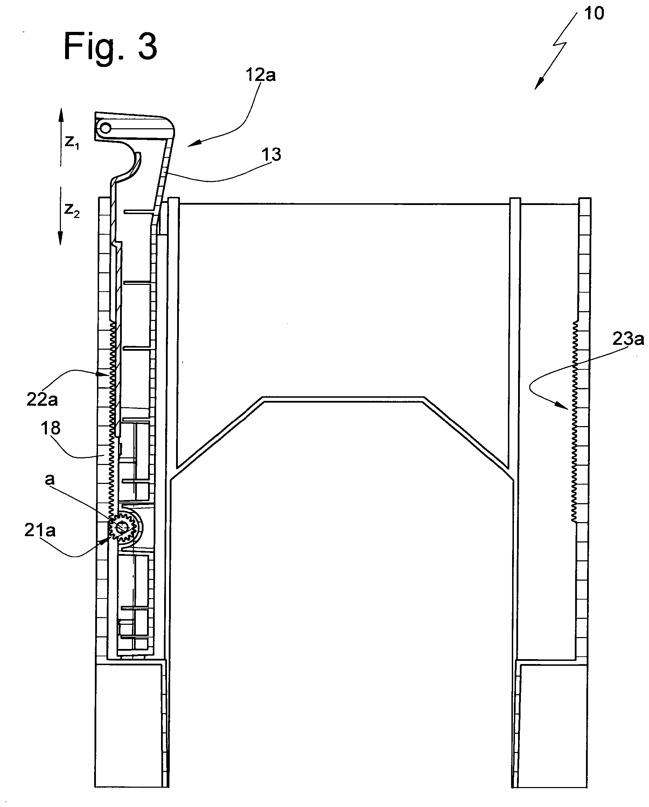

Mit einer Synchronvorrichtung 19 soll ein Verkanten des Läufers 13 relativ zu den Führungsstangen 14a und 14b verhindert werden. Die Synchronvorrichtung 19 umfasst eine an dem Läufer 13 um die Drehachse a drehbar gelagerte Welle 20 an deren beiden Endbereichen jeweils ein Zahnrad 21a und 21b drehfest gehalten ist, so dass sich die Zahnräder 21a und 21b nicht relativ zueinander um die Achse a drehen können. Die Synchronvorrichtung 19 umfasst ferner an dem Basisteil 18 ausgebildete Zahnleisten 22a und 22b, die in den Fig. 2 und 3 erkennbar sind. Das Zahnrad 21a steht mit der Zahnleiste 22a und das Zahnrad 21b mit der Zahnleiste 22b in Eingriff. Auf diese Weise wird eine unerwünschte Drehung des Läufers 13 um die y-Achse verhindert. In Fig. 3 ist auch eine Zahnleiste 23a der Lager- und Führungsvorrichtung 12b erkennbar.

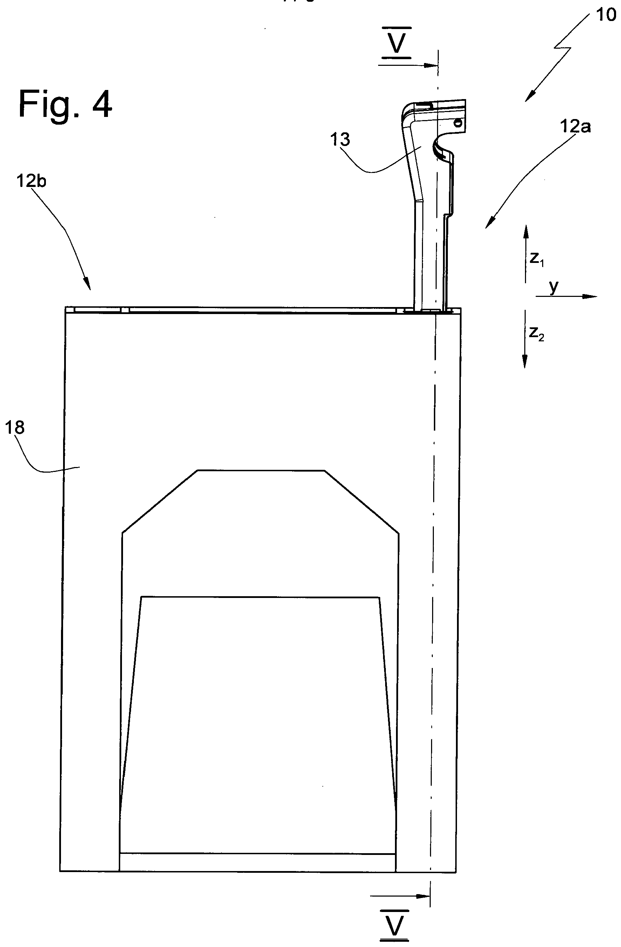

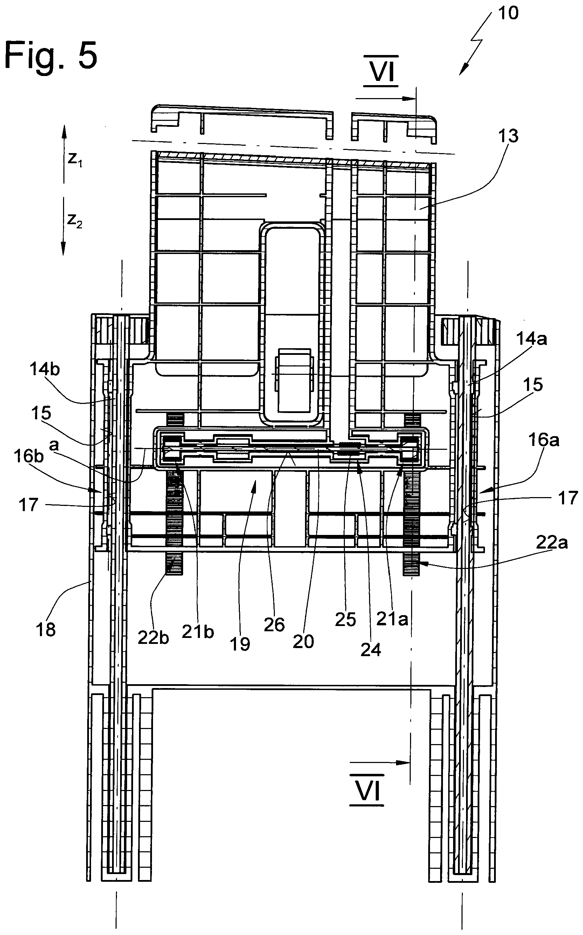

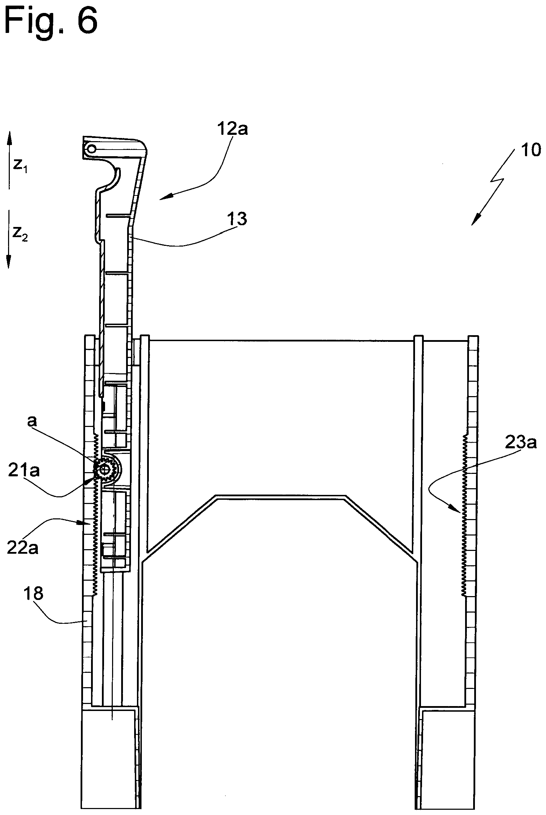

In den Fig. 4 bis 6 ist der Läufer 13 bezüglich der Fig. 1 bis 3 in Richtung z1 verlagert dargestellt. Aus der in den Fig. 4 bis 6 dargestellten Position kann der Läufer 13 in Richtung z2 in die Position untere Endposition gemäß der Fig. 1 bis 3 verstellt werden.

Mittels einer Arretiervorrichtung 24 kann jeder Läufer 13 in seiner vertikalen Position arretiert werden. Im vorliegenden Ausführungsbeispiel umfasst die Arretiervorrichtung 24 eine Schlingfeder 25, die mit einer Außenfläche 26 der Welle 20 zusammenwirkt. Die Schlingfeder 25 ist mit einem Federende fest an dem Läufer 13 befestigt. Ein anderes Federende kann betätigt werden, um die Arretiervorrichtung zwischen einer Arretierposition und einer Löseposition zu verstellen. In der Arretierposition ist der Durchmesser der koaxial zu der Welle 20 angeordneten Schlingfeder 25 so verringert, dass die Welle 20 durch den Kontakt der Schlingfeder 20 mit der Außenfläche 26 an einer Bewegung gehindert wird. Mit anderen Worten, die Welle 20 kann sich nicht relativ zu dem Läufer 13 drehen und eine Bewegung des Läufers 13 wird dadurch verhindert. In der Löseposition ist der Durchmesser der Schlingfeder 25 vergrößert und die Welle 20 kann sich frei drehen. Die Verstellung zwischen der Arretierposition und der Löseposition kann z.B. mit einem außen an der Armlehne vorgesehenen Schalter erfolgen.

Der Antrieb der Läufer 13 ist nicht dargestellt. Dieser kann manuell oder motorisch erfolgen. Bei manuellem Antrieb kann der Läufer federbelastet sein. Die Feder wird z.B. bei einer Bewegung des Läufers 13 in Richtung z2 gespannt und entspannt sich bei einer Bewegung in Richtung z1.

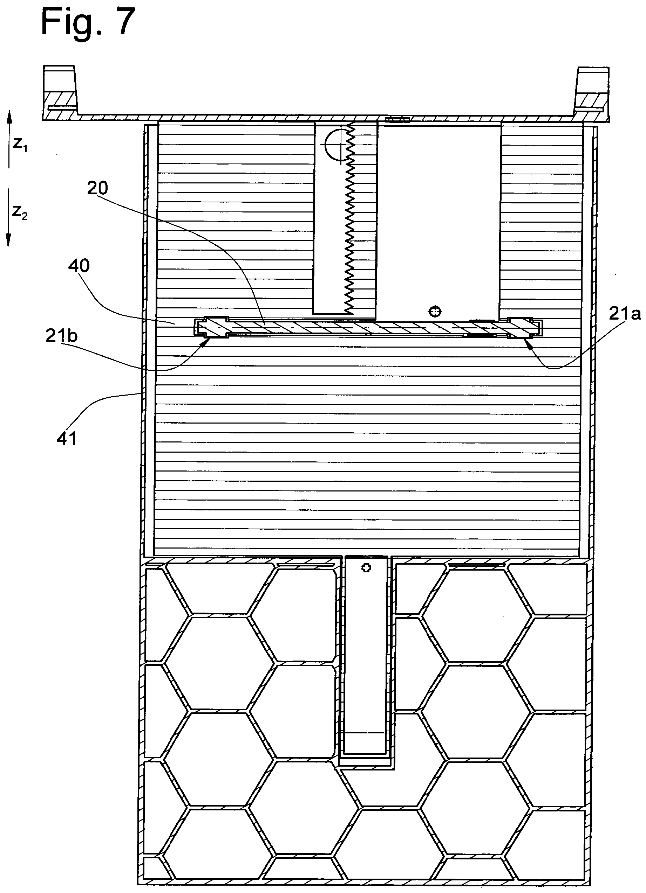

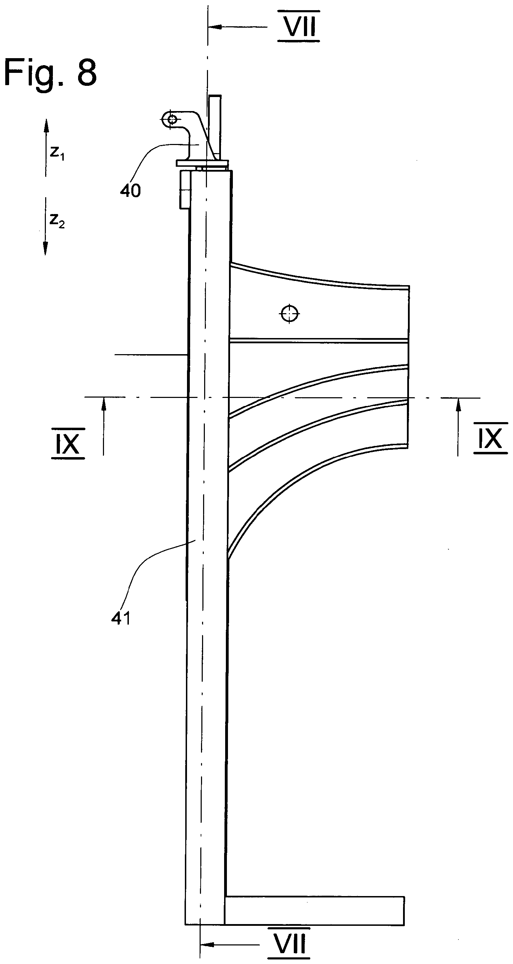

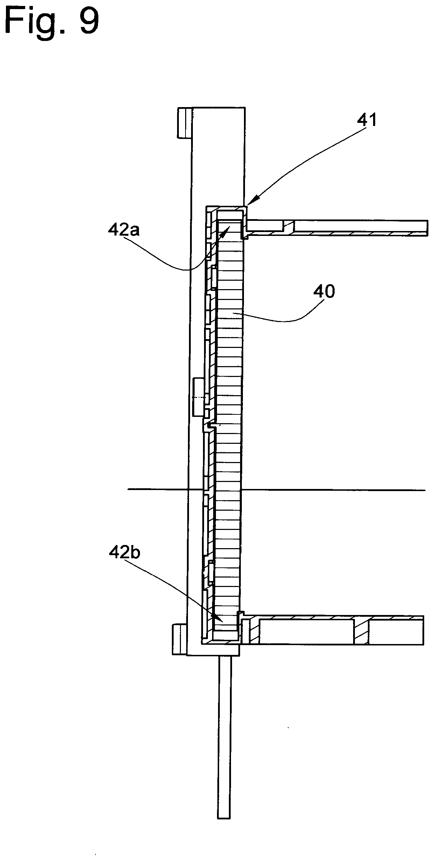

Das zweite Ausführungsbeispiel gemäß der Fig. 7 bis 9 unterscheidet sich im Wesentlichen dadurch von dem ersten Ausführungsbeispiel, dass Läufer 40 an einem Basisteil 41 schubladenartig in die Richtungen z1 und z2 bewegbar geführt sind. Das Basisteil 41 bildet einen Schacht als Führungsbahn aus, wodurch Seitenbereiche 42a und 42b des Läufers 40 von u-förmigen Strukturen umgriffen werden. Die Synchronvorrichtung 19 und die Arretiervorrichtung 24 ist entsprechend dem ersten Ausführungsbeispiel aufgebaut. Bei dem zweiten Ausführungsbeispiel ist der Läufer 40 von einer Rollfeder in Richtung z2 belastet.

## Patentansprüche

1. Armlehne mit einer Armauflage (11) und einem an einer Fahrzeugstruktur anordenbaren Basisteil (18, 41), wobei die Armauflage aus zwei Teilen gebildet ist und einen primären Armauflageteil (11a) sowie einen sekundären Armauflageteil (11b) umfasst, wobei jeder Armauflageteil (11a, 11b) mittels einer Verstellvorrichtung (10) vertikal (z1, z2) verstellbar an dem Basisteil (18, 41) gehalten ist, und wobei jeder Armauflageteil (11a, 11b) mittels einer Arretiervorrichtung (24) in wenigstens einer vertikalen Position festlegbar ist, **dadurch gekennzeichnet, dass** die Verstellvorrichtung eine Führung mit einer ersten sowie einer zweiten Führungsbahn in Form einer Führungsstange (14a, 14b) oder eines Schachtes umfasst, an welcher Führungsbahn Seitenbereiche (16a, 16b, 42a, 42b) eines jedem Armauflageteil (11a, 11b) zugeordneten plattenförmig ausgebildeten Läufers (13) vertikal geführt sind, an welchem das Armauflageteil (11a, 11b) der Armauflage gehalten ist, wobei jeder Läufer (13) in seiner vertikalen Position arretierbar ist.

2. Armlehne nach Anspruch 1, **dadurch gekennzeichnet, dass** die Führung von einer Linearführung gebildet ist.

3. Armlehne nach Anspruch 1 oder 2, **dadurch gekennzeichnet, dass** die Führungsstange (14a, 14b) einen kreiszylindrischen Querschnitt aufweist.

4. Armlehne nach einem der vorhergehenden Ansprüche, **dadurch gekennzeichnet, dass** die Verstellvorrichtung wenigstens ein erstes Paar und ein zweites Paar von Führungsbahn und Läuferseitenbereich (16a, 16b, 42a, 42b) umfasst und dass eine Synchronisationsvorrichtung die Bewegung des Läufers (13) hinsichtlich des ersten Paares und des zweiten Paares derart synchronisiert, dass ein Drehen jedes Läufers um eine Achse (y) verhindert wird, damit kein Verkanten des Läufers erfolgt.

5. Armlehne nach Anspruch 4, **dadurch gekennzeichnet, dass** das erste Paar und das zweite Paar eine Zahnleiste und ein mit der Zahnleiste in Eingriff stehendes Zahnrad umfasst und dass die Zahnräder mit einer Zahnradwelle bewegungsverbunden sind.

6. Armlehne nach einem der vorhergehenden Ansprüche, **dadurch gekennzeichnet, dass** die Arretiervorrichtung eine der Armauflage zugeordnete Schlingfeder umfasst.

7. Armlehne nach Anspruch 6, **dadurch gekennzeichnet, dass** die Schlingfeder mit der Führungsstange oder mit der Zahnradwelle zusammenwirkt und zwischen einer Arretierposition und einer Löseposition verstellbar ist, wobei die Armauflage in der Arretierposition in der eingestellten vertikalen Position arretiert ist und in der Löseposition in vertikaler Richtung (z1, z2) verstellbar ist.

8. Armlehne nach einem der vorhergehenden Ansprüche, **dadurch gekennzeichnet, dass** die Armauflage von wenigstens einer Feder in eine Bewegungsrichtung belastet ist.

## Claims

1. Armrest with an arm support (11) and a base part (18, 41), which can be arranged on a vehicle structure, wherein the arm support is formed of two parts and comprises a primary arm support part (11a) and a secondary arm support part (11b), wherein each arm support part (11a, 11b) is held on the base part (18, 41) so as to be vertically (z1, z2) adjustable by means of an adjusting device (10), and wherein each arm support part (11a, 11b) can be fixed in at least one vertical position by means of a locking device (24), **characterised in that** the adjusting device comprises a guide with a first and a second guide track in the form of a guide rod (14a, 14b) or a shaft, along which guide track lateral regions (16a, 16b, 42a, 42b) of a runner (13) are vertically guided which are formed in the shape of a plate and assigned to each arm support part (11a, 11b), on which runner (13) the arm support part (11a, 11b) of the arm support is held, wherein each runner (13) can be locked in its vertical position.

2. Armrest according to claim 1, **characterised in that** the guide is formed by a linear guide.

3. Armrest according to claim 1 or 2, **characterised in that** the guide rod (14a, 14b) has a circular-cylindrical cross-section.

4. Armrest according to any one of the preceding claims, **characterised in that** the adjusting device comprises at least one first pair and one second pair of guide track and runner lateral region (16a, 16b, 42a, 42b) and **in that** a synchronisation device synchronises the movement of the runner (13) with regard to the first pair and the second pair in such manner that each runner is prevented from rotating about an axis (y) so that the runner does not tilt.

5. Armrest according to claim 4, **characterised in that** the first pair and the second pair comprises a toothed strip and a gear wheel engaging with the toothed strip and **in that** the gear wheels are connected in movement to a gear wheel shaft.

6. Armrest according to any one of the preceding claims, **characterised in that** the locking device comprises a wrap spring assigned to the arm support.

7. Armrest according to claim 6, **characterised in that** the wrap spring cooperates with the guide rod or with the gear wheel shaft and is adjustable between a lock position and a release position, wherein the arm support is locked in the lock position in the set vertical position and is adjustable in the release position in the vertical direction (z1, z2).

8. Armrest according to any one of the preceding claims, **characterised in that** the arm support is loaded by at least one spring into one direction of movement.

## Revendications

1. Accoudoir avec un repose-bras (11) et un élément de base (18, 41) pouvant être agencé sur une structure de véhicule, dans lequel le repose-bras (11) est constitué de deux parties et comprend une partie de repose-bras primaire (11a) et une partie de repose-bras secondaire (11b), dans lequel chaque partie de repose-bras (11a, 11b) est maintenue sur l'élément de base (18, 41) de façon réglable verticalement (z1, z2) au moyen d'un dispositif de réglage (10) et dans lequel chaque partie de repose-bras (11a, 11b) peut être fixée dans au moins une position verticale au moyen d'un dispositif de verrouillage (24), **caractérisé en ce que** le dispositif de verrouillage comprend un mécanisme de guidage avec un premier ainsi qu'un deuxième rail de guidage sous la forme d'une tige de guidage (14a, 14b) ou d'une goulotte, sur lequel rail de guidage des régions latérales (16a, 16b, 42a, 42b) d'un coulisseau (13) configuré en forme de plaque associé à chaque partie de repose-bras (11a, 11b) sont guidées verticalement, sur lequel la partie de repose-bras (11a, 11b) du repose-bras est maintenue, chaque coulisseau (13) pouvant être verrouillé dans sa position verticale.

2. Accoudoir selon la revendication 1, **caractérisé en ce que** le mécanisme de guidage est constitué par un mécanisme de guidage linéaire.

3. Accoudoir selon la revendication 1 ou 2, **caractérisé en ce que** la tige de guidage (14a, 14b) présente une section transversale circulaire.

4. Accoudoir selon une des revendications précédentes, **caractérisé en ce que** le dispositif de réglage comprend au moins un premier couple et un deuxième couple constitués d'un rail de guidage et d'une région latérale de coulisseau (16a, 16b, 42a, 42b) et qu'un dispositif de synchronisation synchronise le déplacement du coulisseau en ce qui concerne le premier couple et le deuxième couple, de sorte à empêcher une rotation de chacun des coulisseaux autour d'un axe (y) afin d'éviter une inclinaison du coulisseau.

5. Accoudoir selon la revendication 4, **caractérisé en ce que** le premier couple, ainsi que le deuxième couple, comprend une crémaillère et une roue dentée en prise avec la crémaillère et que les roues dentées sont reliées en mouvement avec un arbre de roue dentée.

6. Accoudoir selon une des revendications précédentes, **caractérisé en ce que** le dispositif de verrouillage comprend un ressort à enroulement associé au repose-bras.

7. Accoudoir selon la revendication 6, **caractérisé en ce que** le ressort à enroulement coopère avec la tige de guidage ou avec l'arbre de roue dentée et peut être réglé entre une position de verrouillage et une position de libération, dans lequel le repose-bras, en position de verrouillage, est verrouillé dans la position verticale de réglage et, en position de libération, peut être réglé dans la direction verticale (z1, z2).

8. Accoudoir selon une des revendications précédentes, **caractérisé en ce que** le repose-bras est sollicité par au moins un ressort dans une direction de déplacement.
